# EUROPEAN PATENT APPLICATION

(11) **EP 4 116 578 A1**
(43) Date of publication of application: **11.01.2023**
(21) Application number: 21765163.7
(22) Date of filing: 01.03.2021
(51) Int. Cl.: F03D 7/04

(54) **CONTROL UNIT FOR WIND POWER GENERATION DEVICE, WIND POWER GENERATION DEVICE, CONTROL METHOD AND CONTROL PROGRAM FOR WIND POWER GENERATION DEVICE, AND RECORDING MEDIUM**

(30) Priority: 03.03.2020 JP 2020035737
(71) Applicant: Japan Steel Works M&E, Inc., Hokkaido 051-8505 (JP)
(72) Inventor: SUZUKI Jun, Tokyo 141-0032 (JP); SUZUKI Takashi, Muroran-shi, Hokkaido 051-8505 (JP)
(74) Representative: Grünecker Patent- und Rechtsanwälte PartG mbB
(86) International application number: PCT/JP2021/007711
(87) International publication number: WO 2021/177232

(57) **Abstract**

A control unit is configured to control a power generation output of a wind power generation device including a wind turbine and a generator configured to generate power by rotation of a rotor of the wind turbine. The control unit has a rated output mode in which control is performed in such a manner that a power generation output of the generator aims at a rated value. When a rotor rotation speed of the wind turbine in the rated output mode is in a predetermined rotor rotation speed reduction state, the control unit is configured to perform a temporary power generation output increasing process including: a first control including reducing torque applied to the generator so as to suppress a reduction in the rotor rotation speed; and subsequently a second control including increasing the torque in a state in which the reduction in the rotor rotation speed is suppressed so as to temporarily increase the power generation output.

## Description

### TECHNICAL FIELD

The present disclosure relates to a wind power generation device control unit that operates while controlling a power generation output, a wind power generation device, a wind power generation device control method, a control program, and a storage medium.

### BACKGROUND ART

In a wind power generation device, a power generation output is controlled by pitch control for adjusting a blade attachment angle of a wind turbine, yaw control for changing a direction of the wind turbine, torque control of a generator, and the like. Generally, a target rated output is set, and rated output control aiming at this rated output is performed.

In the rated output control, in a state in which the wind speed is higher than a rated wind speed and exceeds the rated output, control is performed by the pitch control such that a rotor rotation speed of the wind turbine does not exceed a rated rotor rotation speed, and in a state in which the wind speed is higher than the rated wind speed and is lower than the rated output, control is performed by the pitch control and the torque control such that the rotor rotation speed of the wind turbine does not fall below the rated rotor rotation speed, and more efficient control is desired.

For example, in PTL 1, a rotor rotation speed adjustment program is started when a mechanical load of a wind turbine is reduced. According to the rotor rotation speed adjustment program, an adjustment rotor rotation speed setting value that is higher than an initial rotor rotation speed setting value is determined, and a maximum rotor rotation speed setting value of the wind turbine is increased. As a result, an amount of captured energy is increased.

In addition, in PTL 2, it is possible to execute a first operation mode in which a rotor rotation speed is maintained at a rated value when a wind speed is equal to or higher than a first wind speed that is a wind speed leading to a rated power generation output, and a rotor rotation speed target value that is a target value of the rotor rotation speed is increased to a value higher than the rated rotor rotation speed according to an increase in the wind speed when the wind speed is lower than the first wind speed and is equal to or higher than a second wind speed that is a wind speed leading to the rated rotor rotation speed, and a second operation mode in which the rotor rotation speed target value is reduced from a value higher than the rated rotor rotation speed to the rated rotor rotation speed according to an increase in the wind speed.

### CITATION LIST

### PATENT LITERATURE

PTL 1: JP 2009-287564 A
PTL 2: JP 2018-119427 A

### SUMMARY OF INVENTION

### TECHNICAL PROBLEM

According to the technique of PTL 1, although it is possible to increase a rated power generation output of a wind power generation system and obtain a larger power generation output, each element such as an electrical device including a generator, a power converter, and the like may perform an operation that is equal to or higher than the rated power generation output, and in a case where a load exceeding an initial design value is applied, it may be necessary to provide a large margin in capacity or the like.

In addition, the technique of PTL 2 is a method of increasing a target rotor rotation speed when a rotor rotation speed of a wind turbine does not reach a rated rotor rotation speed. Since the rotor rotation speed temporarily (instantaneously) exceeds the rated rotor rotation speed, a load higher than initial design may be applied. Further, when a wind power generation device is installed in a mountainous area or the like such as mountainous terrain, a large variation in the rotor rotation speed occurs in accordance with a variation in the wind speed due to complicated terrain undulations.

As described above, in PTLs 1 and 2, in order to obtain a high power generation amount, the power generation amount is increased by temporarily setting the target rotor rotation speed to be high. In a general wind power generation device, when a rotor rotation speed exceeds a certain allowable value (threshold value), a wind turbine is urgently stopped from the viewpoint of wind turbine device protection. The method of increasing the target rotor rotation speed may induce an overspeed state, and as a result, may reduce an operating rate of the wind turbine, which is not desirable in terms of operation.

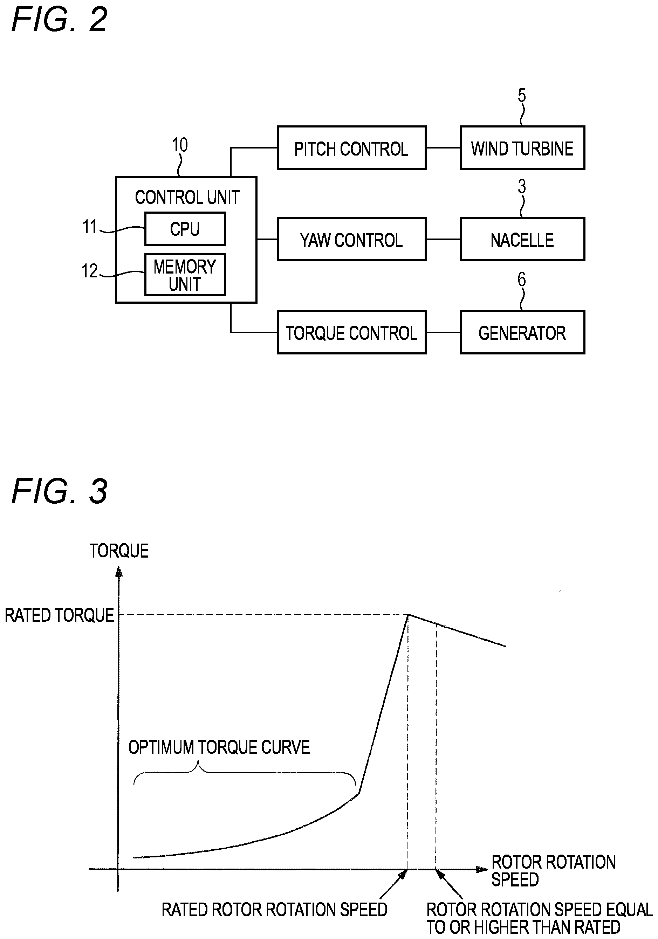

Fig. 3 shows a relationship between a rotor rotation speed and set torque. Fig. 3 shows a control value of normal set torque. In general, when the set torque is applied in proportion to a square of the rotor rotation speed, aerodynamic characteristics of a wind turbine rotor can be optimally maintained, and when the rotor rotation speed is low, the set torque follows the rotor rotation speed (optimum torque curve).

On the other hand, a generator and other devices have limitations on the rotor rotation speed and the torque in terms of device protection. Due to the limitations, it is difficult to maintain the optimum torque curve at all rotor rotation speeds. Therefore, a rated rotor rotation speed and rated torque are set in accordance with requirements of the devices such as the generator. A power generation output at the time of this setting is referred to as a rated output. In addition, a wind speed at which the rated output is achieved is referred to as a rated wind speed. Since the rated rotor rotation speed and a maximum rotor rotation speed at which the optimum torque curve can be maintained generally deviate from each other, there is a region where the torque rapidly increases.

Here, in a control device in related art, control is performed to increase the power generation output by widening a rotor rotation speed region in which power can be generated along the optimum torque curve. However, in general, the rotor rotation speed of the device has an upper limit for protecting the device. Further, in the control in the related art, particularly, a case where the wind speed increases over time is shown, and setting in a case where the wind speed reduces is not described. It is considered that the control in the related art in the case where the wind speed reduces follows normal torque control (corresponding to a solid line in Fig. 3). Therefore, when operating between the rated rotor rotation speed and the maximum rotor rotation speed at which the optimum torque curve can be maintained, a reduction in power generation efficiency cannot be avoided.

An object of the present disclosure is to provide control contents suppressing a reduction in an amount of generated power when a wind power generation device is operated particularly in the vicinity of a rated rotor rotation speed under a condition of a wind speed that changes over time and the wind speed reduces over time (temporarily).

### SOLUTION TO PROBLEM

A control unit according to one illustrative aspect of the present disclosure is a control unit configured to control a power generation output of a wind power generation device including a wind turbine and a generator configured to generate power by rotation of a rotor of the wind turbine,
wherein the control unit has a rated output mode in which control is performed in such a manner that a power generation output of the generator aims at a rated value, and
in a case where a rotor rotation speed of the wind turbine in the rated output mode is in a predetermined rotor rotation speed reduction state, the control unit is configured to perform a temporary power generation output increasing process including:
   a first control including reducing torque applied to the generator so as to suppress a reduction in the rotor rotation speed; and subsequently
   a second control including increasing the torque in a state in which the reduction in the rotor rotation speed is suppressed so as to temporarily increase the power generation output.

The control unit may be configured to perform a pitch control of changing an attachment angle of a blade of the wind turbine.

The control unit may be configured to, during performing of the temporary power generation output increasing process, set the pitch control to be different from a pitch control in a normal state.

The predetermined rotor rotation speed reduction state may be a state in which the rotor rotation speed is reduced to a predetermined speed or the rotor rotation speed is reduced at a predetermined ratio relative to the rotor rotation speed in the rated output mode.

The predetermined rotor rotation speed reduction state may be determined based on a value of a pitch angle.

The predetermined rotor rotation speed reduction state may be a state in which a rated output is reduced continues for a predetermined time.

A time period in which the first control is performed may be determined in advance.

The control unit may be configured to, after the performing of the temporary power generation output increasing process and after a predetermined standby time, perform a control to return to a normal control.

The reduction in the rotor rotation speed may be suppressed by at least one of a reduction in a reduction amount of the rotor rotation speed, maintenance of the rotor rotation speed, or an increase in the rotor rotation speed.

The reduction in the torque in the first control may be performed in accordance with reduction of a target power generation output.

In the second control, the control unit may be configured to increase the torque in accordance with a target power generation output that is equal to or less than that in the rated output mode.

The control unit may be configured to, in a case where the rotor rotation speed increases in the second control, determine a reduction amount of the torque in the first control and an increase amount of the torque in the second control such that the increased rotor rotation speed becomes equal to or less than a rated rotor rotation speed in the rated output mode.

A wind power generation device according to one illustrative aspect of the present disclosure includes: a wind turbine; a generator configured to generate power by rotation of a rotor of the wind turbine; and the control unit according to any one of the precedent aspects.

A control method according to one illustrative aspect of the present disclosure is a wind power generation device control method of controlling a power generation output of a wind power generation device, the wind power generation device including a wind turbine and a generator configured to generate power by rotation of a rotor of the wind turbine and having a rated output mode, in which control is performed in such a manner that a power generation output of the generator aims at a rated value,
wherein the control method comprises, in a case where a rotor rotation speed of the wind turbine in the rated output mode is in a predetermined rotor rotation speed reduction state, performing a temporary power generation output increasing process including:
suppressing torque applied to the generator so as to suppress a reduction in the rotor rotation speed; and subsequently
increasing the torque applied to the generator in a state in which the reduction in the rotor rotation speed is suppressed so as to temporarily increase the power generation output.

A control program according to one illustrative aspect of the present disclosure is a control program executed by the control unit according to any one of the precedent aspects for controlling a power generation output of a wind power generation device, the wind power generation device comprising a wind turbine, a generator configured to generate power by rotation of a rotor of the wind turbine, and the control unit,
wherein the control program causes the control unit to perform the control or the temporary power generation output increasing process according to any one of the precedent aspects.

A storage medium according to one illustrative aspect of the present disclosure is a computer-readable storage medium storing the control program.

### ADVANTAGEOUS EFFECTS OF INVENTION

The present disclosure has the following effects.
(1) By applying the present disclosure, it is possible to increase a power generation amount obtained within a certain period of time.
(2) According to the present disclosure, it is possible to adopt a method of increasing obtained power generation amount by temporarily reducing the torque applied to the generator rather than increasing a target rotor rotation speed or an actual rotor rotation speed, and there is no risk of causing an increased load on the wind turbine caused by the increase in the target rotor rotation speed or the actual rotor rotation speed, or stopping of the wind turbine that is likely to occur due to an overspeed state.
(3) By applying the present disclosure, it is possible to suppress a reduction in power when the power generation output is reduced, and as a result, power quality of the wind power generation facility can be improved by alleviating a variation in generated power within a period.

### BRIEF DESCRIPTION OF DRAWINGS

[Fig. 1] Fig. 1 schematically shows a wind power generation device according to an embodiment of the present disclosure.
[Fig. 2] Fig. 2 is a functional block diagram of a control unit that controls the wind power generation device.
[Fig. 3] Fig. 3 is a graph showing a relationship between torque and a rotor rotation speed of a wind turbine.
[Fig. 4A] Fig. 4A shows set torque at the time of reduction of a target power generation output using the graph showing the relationship between the torque and the rotor rotation speed of the wind turbine.
[Fig. 4B] Fig. 4B shows the set torque at the time of reduction of the target power generation output using the graph showing the relationship between the torque and the rotor rotation speed of the wind turbine.
[Fig. 5] Fig. 5 is a flowchart showing a control method that is an example of the present embodiment.
[Fig. 6] Fig. 6 is a graph showing changes over time in a hub height wind speed, a rotor rotation speed of a wind turbine, a pitch angle, a power generation output, and torque, which show simulation results.
[Fig. 7] Fig. 7 is a graph showing changes over time in the hub height wind speed, the rotor rotation speed of the wind turbine, the pitch angle, the power generation output, and the torque, which show other simulation results.
[Fig. 8] Fig. 8 is a table showing simulation conditions.

### DESCRIPTION OF EMBODIMENTS

Hereinafter, an embodiment of the present disclosure will be described.

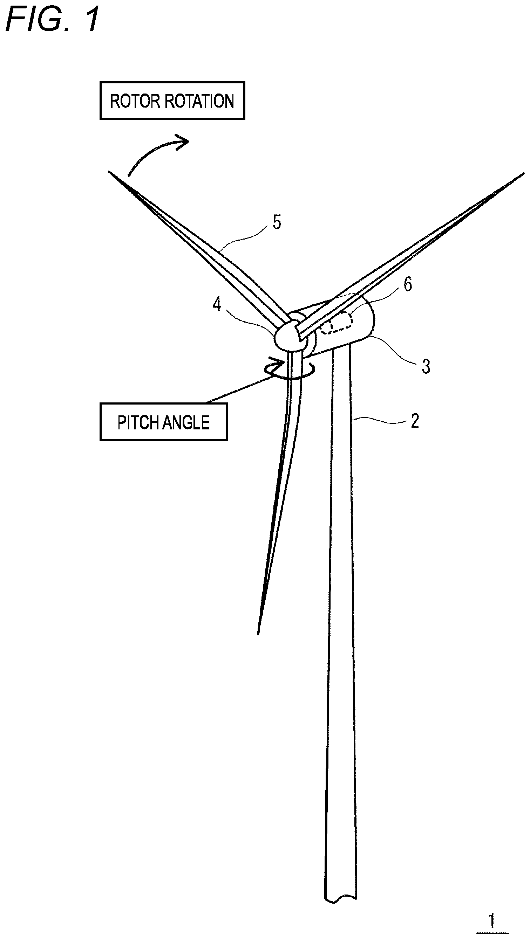

As shown in Fig. 1, in a wind power generation device 1 according to the embodiment of the present disclosure, a nacelle 3 is rotatably attached to a tower 2 by a vertical shaft perpendicular to the ground, and a hub 4 is attached to the nacelle 3. Blades 5 are attached to the hub 4. A rotor constituted by the hub 4 and the blades 5 is rotatable by a horizontal shaft. The rotor is connected to a generator 6 installed in the nacelle 3 by a speed increaser (not shown) or the like.

The wind power generation device 1 further includes a control unit 10 that controls a power generation output of the wind power generation device 1. An anemometer (not shown) that measures a wind speed of the hub 4 is installed above the nacelle 3. A measurement result of the anemometer is transmitted to the control unit 10. A location where the anemometer is installed is not particularly limited. Further, the wind power generation device 1 may not include the anemometer, and information on the wind speed may be obtained from external measurement data or the like.

In addition, the control unit 10 may be installed outside the nacelle 3, may be installed inside the nacelle 3 or inside the tower 2, or may be connected to devices inside the nacelle 3 via a network. The control unit 10 corresponds to a control unit of the wind power generation device of the present disclosure. Although the wind power generation device 1 is a horizontal shaft wind power generation device in this embodiment, the wind power generation device of the present disclosure is not limited to be a horizontal shaft device.

As shown in Fig. 2, the control unit 10 includes a CPU 11 and a memory unit 12. In the memory unit 12, a computer-readable storage medium such as a ROM, a RAM, a nonvolatile memory, an HDD, or an SSD is used, and a control program for controlling the wind power generation device 1, operation parameters of the wind power generation device 1, various types of setting data, and the like are stored. Although the control program of the present embodiment is stored in the memory unit 12, the control program of the present disclosure may also be stored in a memory unit such as a removable USB memory.

By the CPU 11, a control program for wind power generation is read from the memory unit 12 or the like. The read program is loaded onto the RAM or the like and executed by cooperation of the CPU 11 and the RAM or the like.

The memory unit 12 stores parameters such as pitch control, torque control, and an adjustment curve for a torque and a rotor rotation speed of a wind turbine in a rated operation mode, and data such as a reference of a rotor rotation speed reducing state for shifting to first control in a temporary power generation output increasing process, a torque reduction amount in the first control, a predetermined time when the first control is performed, a torque increase amount in second control, a time when the second control is performed, a reduction amount of a target power generation output when the temporary power generation output increasing process is performed, and a standby time after reduction of the target power generation output. Such data may be changed by an operator.

The control unit 10 can perform overall control of the wind power generation device 1, and can perform pitch control that changes an attachment angle of each blade 5, yaw control of the nacelle 3, torque control of the generator 6, and the like as power generation output control of the generator 6.

The wind power generation device 1 is normally operated in a rated output mode. The rated output mode is a mode in which control is performed in such a manner that a power generation output of the generator 6 aims at a rated value. Control of the rated output mode in the wind power generation device 1 will be described.

Along with start of the rated output mode, the control unit 10 obtains a current wind turbine rotor rotation speed, and controls a rated output (rotor rotation speed) mainly based on the current rotor rotation speed. In the power generation output control, the power generation output of the wind power generation device 1 is controlled to a target rated output value by the pitch control that changes the attachment angle of each blade 5, the yaw control that adjusts a direction of the nacelle 3, the torque control of the generator 6, or the like. When the power generation output of the wind power generation device 1 cannot maintain the rated output, the power generation output can be controlled according to an adjustment curve for a torque and a rotor-rotation-speed shown in Fig. 3.

Next, the temporary power generation output increasing process in the present embodiment will be described.

When the wind power generation device 1 is operated in the vicinity of a rated wind speed (however, equal to or higher than the rated wind speed), the rotor rotation speed is operated at an operating point corresponding to a rated rotor rotation speed, and load torque is operated at an operating point corresponding to rated torque. When the wind speed reduces as the time elapses from this operating state, aerodynamic torque obtained from winds reduces, and thus the operating point of the load torque reduces in accordance with the torque curve of Fig. 3. At this time, since the load torque greatly reduces relative to the rotor rotation speed, the power generation output greatly reduces.

Due to <Reason Why Reduction in Wind Speed is Temporary> to be described later, the reduction in wind speed is often temporary. When the wind power generation device 1 is controlled in accordance with the torque curve shown in Fig. 3, the power generation output fluctuates intensely in accordance with increase and reduction of the wind speed. In such an operating state in the vicinity of the rated wind speed, when the wind speed increases, a maximum power generation output is controlled so as not to exceed the rated output, and thus the maximum power generation output is roughly adjusted to the rated output. However, when the wind speed reduces, the power generation output is in accordance with the wind speed, and therefore, as turbulence intensity increases at a site where the wind turbine is installed, a power generation amount in this operating region (a sum of power generation outputs obtained during a certain period of time) reduces.

Therefore, in the present embodiment, when the rotor rotation speed reduces (slightly) below the rated rotor rotation speed along with the reduction in the wind speed, the target power generation output of the wind turbine is instantaneously reduced by using a target power generation output reduction function that is generally provided in the wind turbine, and thus the power generation amount can be increased by <Estimation Principle> to be described later.

In addition, in the present embodiment, it is possible to determine a reference related to a rotor rotation speed reduction state in advance and perform control in accordance with the reference.

In addition, a large variable-speed wind turbine including a general variable pitch system has a function capable of changing the target power generation output. This function is normally achieved by reducing the target rotor rotation speed and the set torque. The target rotor rotation speed and the set torque can be changed not only by a producer (maker) of wind turbine control but also by an owner in many cases. The present embodiment is characterized in that, by enabling this function to be used during operation, a person other than the maker can easily control the target power generation output. In addition, the present embodiment is characterized in that the control of the target power generation output can be applied without changing any existing control system.

It should be noted that the power generation output reduces once in the process of the control for reducing the target power generation output, and this is a case where an existing function of reducing the target power generation output is used. Since it is important to temporarily increase an actual rotor rotation speed (within a range not exceeding the rated rotor rotation speed) without increasing the target rotor rotation speed to be higher than the rated rotor rotation speed, a function of increasing the rotor rotation speed by temporarily reducing the load torque while maintaining the target power generation output at the rated output may be provided.

Hereinafter, the function of reducing the target power generation output will be described.

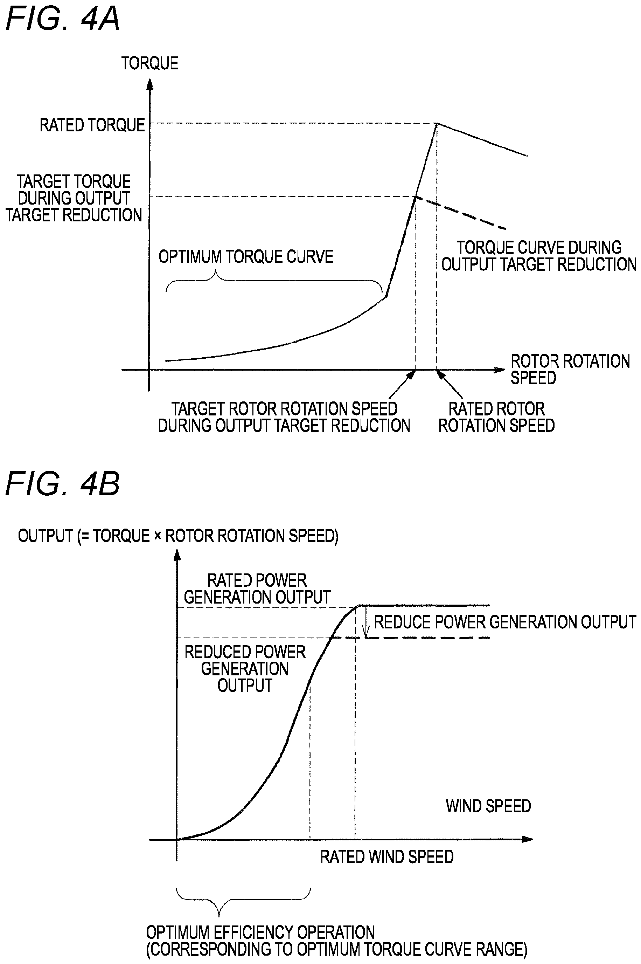

The function of reducing the target power generation output will be described with reference to Figs. 4A and 4B. The function of reducing the target power generation output is a function generally used in general pitch control and control of a large variable-speed wind turbine, and the target power generation output is usually set to the rated output. The target power generation output can be changed in a direction in which the target power generation output is reduced as desired depending on a system request, operation control, and an operating state. When the target power generation output is reduced, the rotor rotation speed and the torque are controlled (operated) in a direction in which the rotor rotation speed and the torque are reduced at the same time (Figs. 4A and 4B).

Therefore, when a command (control) is issued to reduce the target power generation output in a state in which the wind power generation device is operated at the rated output, the wind power generation device is controlled to reduce the set torque in order to reduce the current power generation output in accordance with the target power generation output while attempting to reduce the rotor rotation speed by the pitch control. At this time, since the pitch control requires more time for a control effect to be obtained as compared with the torque control, the rotor rotation speed is temporarily slightly increased. However, since this operation (control) is performed when the rotor rotation speed is lower than the rated rotor rotation speed, the increase in the rotor rotation speed due to this operation is controlled so as not to exceed the rated rotor rotation speed. Here, since the target rotor rotation speed is always equal to or less than the rated rotor rotation speed during a period of this control operation, the rotor rotation speed is controlled so as to become equal to or less than a target value immediately when the rotor rotation speed exceeds the target value.

It should be noted that graphs shown in Figs. 3, 4A, and 4B are examples, and the relationship between the rotor rotation speed and the torque in the present disclosure is not limited to those shown.

### <Estimation Principle>

When the wind speed is being reduced, if the rotor rotation speed reduces, the rotor will lose kinetic energy, and therefore, when the wind speed increases subsequently, obtained aerodynamic torque is used for both acceleration of the rotor and power generation. On the other hand, in a case where the reduction in the wind speed is small, the kinetic energy of the rotor can be kept high by keeping a high rotor rotation speed, and thus it is estimated that it is possible to obtain power generation energy immediately when the wind speed increases. In a case where the wind speed fluctuates intensely, a state in which the wind speed increases immediately after the wind speed reduces frequently occurs.

### <Reason Why Reduction in Wind Speed is Temporary>

In general, since the wind speed at a specific site is determined by a distribution of atmospheric pressure, a temperature, or the like, the wind speed is considered to be substantially constant within a period of time (about 10 minutes to 1 hour) during which the distribution of atmospheric pressure, the temperature, or the like can be considered to be substantially the same. On the other hand, when the wind power generation device 1 is installed at a place having a complicated topographic shape such as a mountainous area, turbulence of wind (turbulent flow) is increased due to the topographic shape. As a result, it is found that, for the wind power generation device 1 installed at the place where the topographic shape is complicated, the fluctuation of the wind speed (turbulence intensity) increases even when an average wind speed for a certain period of time (average wind speed) is substantially the same as compared with a case where the wind power generation device 1 is installed in a flat topographic shape. Such a wind speed fluctuation is caused by a flow separated by terrain (mountain) located upstream, and a large-scale separation vortex generated along with the separation or a fine vortex system caused by terrain shearing is mixed thereto, continuously flows to a target point and fluctuates (fluctuates at intervals of about several seconds). Since the wind speed fluctuation repeats a reduction and an increase, when the wind speed reduces, the wind speed often returns from the reduction after several seconds to several tens of seconds.

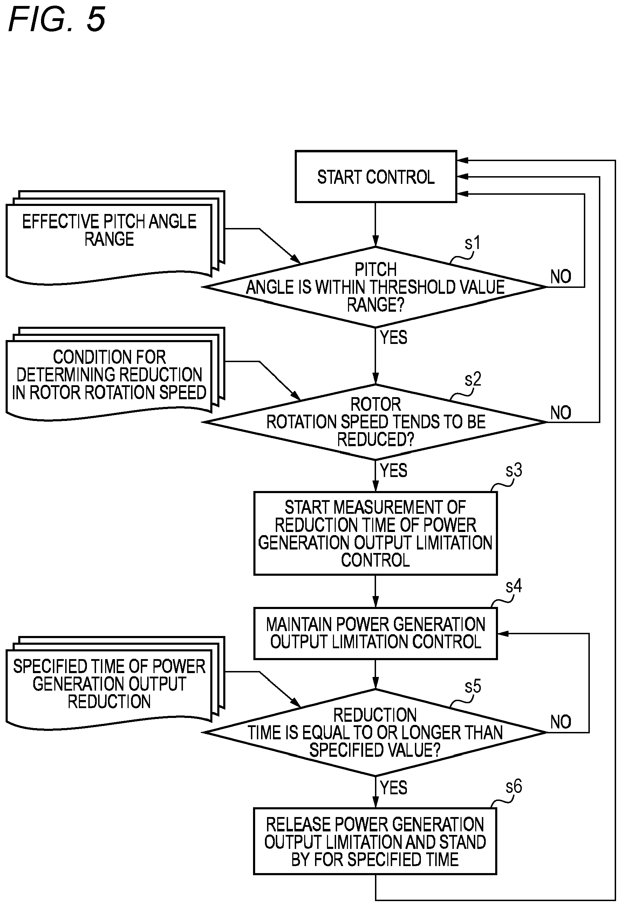

Hereinafter, a control method of the temporary power generation output increasing process in the present embodiment will be described with reference to a flowchart of Fig. 5. The following control method can be executed by a program operated by the control unit 10.

Along with start of control of the wind power generation device 1, a pitch angle is obtained in order to determine that the wind turbine is operating in the vicinity of the rated wind speed. When a value of the obtained pitch angle is equal to or less than a threshold value, the control unit 10 determines that the obtained pitch angle is in a control target region (step s1). The threshold value that is an effective pitch angle range is, for example, equal to or less than a maximum opening angle + 3 degrees. The threshold value is set in advance, stored in the memory unit 12 or the like, and read from the memory unit 12 or the like as necessary.

If the obtained value of the pitch angle is not equal to or less than the threshold value (No in step s1), the process stands by. That is, the determination of whether the value of the pitch angle is equal to or less than the threshold value (step s1) is repeated.

When the obtained value of the pitch angle is equal to or less than the threshold value (Yes in step s1), the control unit 10 determines that the rotor rotation speed tends to be reduced (step s2). A condition for determining whether the rotor rotation speed is in a reducing state is set in advance, stored in the memory unit 12 or the like, and read from the memory unit 12 or the like as necessary. For example, it can be determined that the rotor rotation speed is in the reducing state when a state in which the rotor rotation speed is reduced continues for a predetermined time and is determined as a rotor rotation speed reduction state.

Although whether the rotor rotation speed is in the reduction state is determined by the state of the pitch angle in the above embodiment, the present invention is not limited to this mode, and the determination may also be performed based on a measurement result of a measured wind speed. Although whether the rotor rotation speed is in the reduction state can be determined based on, for example, a reduction amount or a reduction ratio relative to the rated rotor rotation speed and the fact that a state in which the rated output reduces has continued for a predetermined time in the present embodiment, the present disclosure is not limited to specific conditions.

In the process of the temporary power generation output increasing process, a one-second average value and an instantaneous value of the rotor rotation speed are used, and when the one-second average rotor rotation speed is equal to or higher than a predetermined rotation speed (for example, 18.7 rpm or higher) and the instantaneous rotor rotation speed is lower than the predetermined rotor rotation speed (for example, 18.7 rpm), it is determined that the rotor rotation speed tends to be reduced (Yes in step s2). Thereafter, the power generation output is set so as to be reduced to a specified amount (step s3). In step s3, for example, the power generation output is set to be reduced from the rated output (for example, 2000 kW) to the target power generation output (for example, 1800 kW). Next, the control of the power generation output limitation is maintained. That is, the state in which the target power generation output is reduced is maintained (step s4). Next, it is determined whether the reduction of the target power generation output is maintained for a specified period of time (1 second in this example) (step s5). The specified period of time in step s5 is set in advance, stored in the memory unit 12 or the like, and read from the memory unit 12 or the like as necessary.

When the reduction time during which the target power generation output is reduced does not reach the specified period of time (specified value) (No in step s5), the control unit 10 maintains the limitation of the target power generation output (step s4), and repeats the determination of whether the time during which the target power generation output is reduced is equal to or longer than the specified period of time (specified value) (step s5). This limitation of the target power generation output corresponds to first control of the present disclosure.

When the reduction time during which the target power generation output is reduced is equal to or longer than the specified period of time (specified value) (Yes in step s5), the control unit 10 releases the limitation of the target power generation output (step s6). Further, in order not to suppress the target power generation output from being continuously controlled, after a certain specified period of time (10 seconds in this example) has elapsed (step s6), the state returns to a monitoring state of the target power generation output again. The process of returning to the monitoring state after limiting the target power generation output corresponds to second control of the present disclosure. That is, the second control is control that temporarily increases the power generation output by increasing the torque in the state in which the reduction in the rotor rotation speed is suppressed, and can be performed by returning the torque to the rated state. However, in the second control, the torque may also be increased to torque different from the rated torque. It should be noted that control for returning to normal control is performed after the temporary power generation output increasing process is executed and after predetermined standby time, and the "control for returning to normal control" refers to an operation for returning to original control of the wind power generation device.

In the present embodiment, by controlling the reduction of the target power generation output, the torque is reduced, and the rotor rotation speed of the wind turbine is reduced by the pitch control. However, during the reduction of the target power generation output, the pitch control may not be performed, an adjustment amount of the pitch control may be reduced, or the pitch control may be different from the normal pitch control, and it may also be possible to set in advance whether to perform the pitch control different from the normal pitch control. Here, the normal pitch control refers to the pitch control at the rated output.

However, by performing the pitch control during the reduction of the target power generation output, the pitch is controlled in advance in a feathering direction (a direction in which the power generation output is reduced) when the wind speed reduces, and therefore, when the wind speed rapidly increases later, the rotor rotation speed is less likely to increase rapidly. Therefore, the risk of stopping operation of the wind turbine due to overspeed can be reduced.

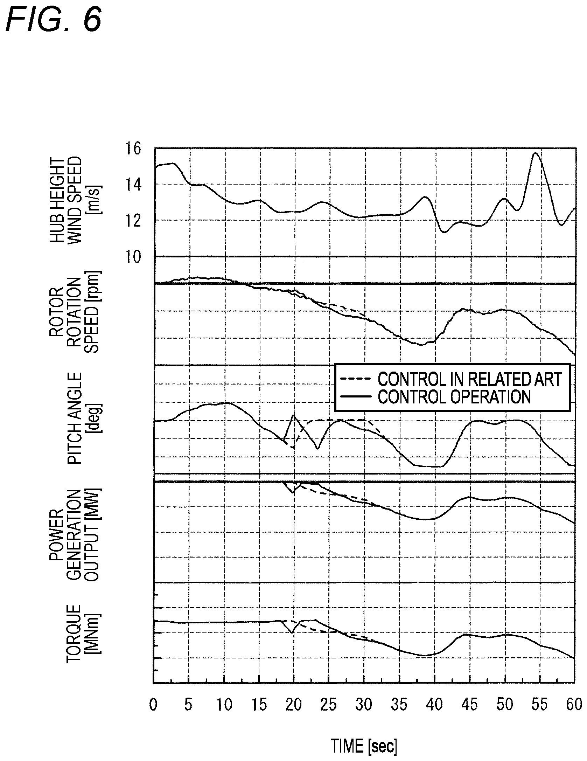

Fig. 6 shows a result of verification of the effect of the present disclosure by simulation.

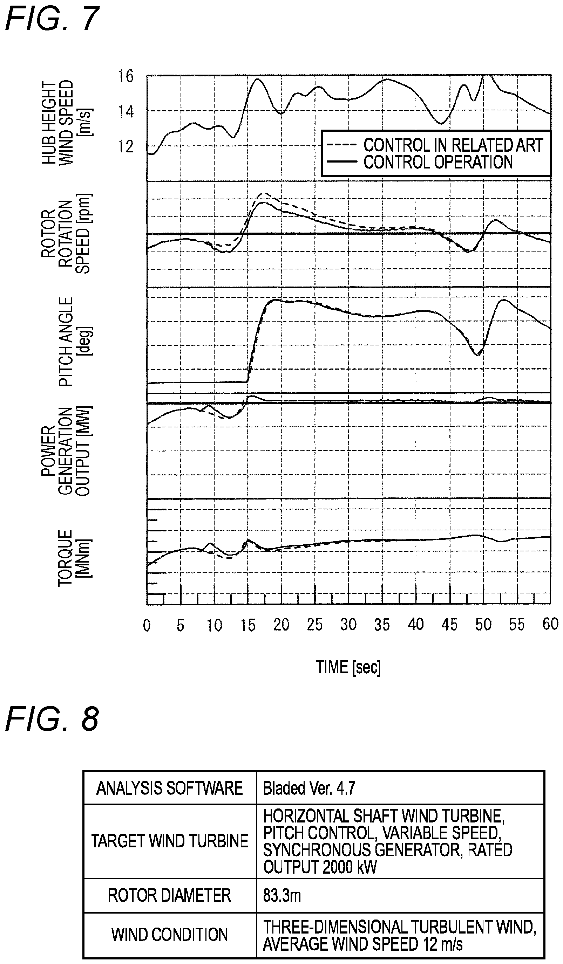

The simulation was performed under conditions shown in Fig. 8. Bladed Ver 4.7 (trademark) was used as analysis software.

In the simulation shown in Fig. 6, wind turbine behaviors in response to the same inflow wind (three-dimensional turbulent wind) are analyzed, and a difference in behaviors between a control state of related art and a control state of the present embodiment is shown. During the behavior of about 20 seconds, according to the control operation of the present embodiment, a reduction in the rotor rotation speed is detected and control for reducing the target power generation output is performed, and thus the power generation output reduces and the rotor rotation speed slightly increases. By this control of the present embodiment, it can be confirmed that the power generation output increases thereafter.

Fig. 7 shows another simulation result. In the same manner as Fig. 6, in Fig. 7, it is possible to confirm a state in which the reduced state of the target power generation output is changed (operated) during about 10 seconds. In the example shown in Fig. 7, the maximum rotor rotation speed is reached at about 17 seconds, and the maximum rotor rotation speed is lower in the control operation of the present embodiment as compared with that in control in the related art. From Fig. 7, it can be seen that the control of the present embodiment not only has the effect of increasing the power generation amount but also has an effect of reducing the reached rotor rotation speed in response to a gust of wind generated thereafter. As a result, fluctuations in power of the wind power generation device 1 can be alleviated, and the risk of stopping the operation of the wind turbine due to overspeed can be reduced.

Although the present disclosure has been described based on the above embodiment, the scope of the present disclosure is not limited to the contents of the above description. The above-described embodiment can be appropriately modified without departing from the scope of the present disclosure.

The present application is based on a Japanese patent application filed on March 3, 2020 (Japanese Patent Application No. 2020-035737), and the contents thereof are incorporated herein as reference.

## Claims

1. A control unit configured to control a power generation output of a wind power generation device including a wind turbine and a generator configured to generate power by rotation of a rotor of the wind turbine,
wherein the control unit has a rated output mode in which control is performed in such a manner that a power generation output of the generator aims at a rated value, and
in a case where a rotor rotation speed of the wind turbine in the rated output mode is in a predetermined rotor rotation speed reduction state, the control unit is configured to perform a temporary power generation output increasing process including:
a first control including reducing torque applied to the generator so as to suppress a reduction in the rotor rotation speed; and subsequently
a second control including increasing the torque in a state in which the reduction in the rotor rotation speed is suppressed so as to temporarily increase the power generation output.

2. The control unit according to claim 1, wherein the control unit is configured to perform a pitch control of changing an attachment angle of a blade of the wind turbine.

3. The control unit according to claim 2, wherein, during performing of the temporary power generation output increasing process, the control unit is configured to set the pitch control to be different from a pitch control in a normal state.

4. The control unit according to any one of claims 1 to 3, wherein the predetermined rotor rotation speed reduction state is a state in which the rotor rotation speed is reduced to a predetermined speed or the rotor rotation speed is reduced at a predetermined ratio relative to the rotor rotation speed in the rated output mode.

5. The control unit according to any one of claims 1 to 3, wherein the predetermined rotor rotation speed reduction state is determined based on a value of a pitch angle.

6. The control unit according to any one of claims 1 to 5, wherein the predetermined rotor rotation speed reduction state is a state in which a rated output is reduced continues for a predetermined time.

7. The control unit according to any one of claims 1 to 6, wherein a time period in which the first control is performed is determined in advance.

8. The control unit according to any one of claims 1 to 7, wherein after the performing of the temporary power generation output increasing process and after a predetermined standby time, the control unit is configured to perform a control to return to a normal control.

9. The control unit according to any one of claims 1 to 8, wherein the reduction in the rotor rotation speed is suppressed by at least one of a reduction in a reduction amount of the rotor rotation speed, maintenance of the rotor rotation speed, or an increase in the rotor rotation speed.

10. The control unit according to any one of claims 1 to 9, wherein the reduction in the torque in the first control is performed in accordance with reduction of a target power generation output.

11. The control unit according to claim 10, wherein in the second control, the control unit is configured to increase the torque in accordance with a target power generation output that is equal to or less than that in the rated output mode.

12. The control unit according to any one of claims 1 to 11, wherein in a case where the rotor rotation speed increases in the second control, the control unit is configured to determine a reduction amount of the torque in the first control and an increase amount of the torque in the second control such that the increased rotor rotation speed becomes equal to or less than a rated rotor rotation speed in the rated output mode.

13. A wind power generation device comprising:
a wind turbine;
a generator configured to generate power by rotation of a rotor of the wind turbine; and
the control unit according to any one of claims 1 to 12.

14. A wind power generation device control method of controlling a power generation output of a wind power generation device, the wind power generation device including a wind turbine and a generator configured to generate power by rotation of a rotor of the wind turbine and having a rated output mode, in which control is performed in such a manner that a power generation output of the generator aims at a rated value,
wherein the control method comprises, in a case where a rotor rotation speed of the wind turbine in the rated output mode is in a predetermined rotor rotation speed reduction state, performing a temporary power generation output increasing process including:
suppressing torque applied to the generator so as to suppress a reduction in the rotor rotation speed; and subsequently
increasing the torque applied to the generator in a state in which the reduction in the rotor rotation speed is suppressed so as to temporarily increase the power generation output.

15. A control program executed by the control unit according to any one of claims 1 to 12 for controlling a power generation output of a wind power generation device, the wind power generation device comprising a wind turbine, a generator configured to generate power by rotation of a rotor of the wind turbine, and the control unit,
wherein the control program causes the control unit to perform the control or the temporary power generation output increasing process according to any one of claims 1 to 12.

16. A computer-readable storage medium storing the control program according to claim 15.
